# EUROPÄISCHE PATENTSCHRIFT

(11) **EP 4 067 159 B1**
(45) Veröffentlichungstag und Bekanntmachung des Hinweises auf die Patenterteilung: **25.12.2024**
(21) Anmeldenummer: 21159056.7
(22) Anmeldetag: 24.02.2021
(51) Int. Cl.: B60L 53/302, B60L 53/31

(54) **KOMBI-LADESTATION BZW. BASISSTATION FÜR ELEKTROFAHRZEUGE**
COMBINED CHARGING STATION OR BASE STATION FOR ELECTRIC VEHICLES
STATION DE CHARGE OU STATION DE BASE POUR VEHICULES ELECTRIQUES

(43) Veröffentlichungstag der Anmeldung: 05.10.2022
(73) Patentinhaber: poweersnet GmbH, 7302 Landquart (CH)
(72) Erfinder: Soland, Pascal, 7524 Zuoz (CH)

(56) Entgegenhaltungen:
- DE-A1- 102018 212 978
- DE-U1- 202019 004 533
- US-A1- 2016 221 458

## Beschreibung

Die vorliegende Erfindung betrifft eine universelle Ladestation für Elektrofahrzeuge aller Art, also für Elektroroller oder -scooter und elektrische Fahrräder, Light Electric Vehicles (LEV), über sämtliche Elektroautos und -SUVs bis hin zu -Lastfahrzeugen und sonstige batterieelektrische Geräte. Für solche universellen Ladestationen scheint sich der Begriff "Kombi-Ladestation" eingebürgert zu haben, für Ladestationen stehend, die mehrere Ladearten (z.B. sowohl mittels Wechsel-, als auch mittels Gleichstrom, in unterschiedlichen Leistungsstärken) und unterschiedliche Ladeanschlüsse (z.B. Typ 2, CCS oder CHAdeMO) bieten. Eine erfindungsgemäße Kombi-Ladestation soll auch als sogenannte Basisstation Verwendung finden, d.h., als Basisort für die Ausleihe und aber auch die Rückgabe von Elektrofahrzeugen. Des Weiteren betrifft die vorliegende Erfindung auch zwei neuartige Verfahren zur Anwendung einer jeweiligen, wie offenbarten Kombi-Ladestation. Die Erfindung gilt gleichermaßen für Ladestationen, die an einem Aufstellungsort aufgestellt sind oder aber auch für sogenannte Wallboxes, die an einer Wand montiert sind.

Abgesehen von gesetzlichen Vorschriften und sonstigen Normen müssen Ladestationen, gemeinhin auch Ladesäulen genannt, oder eben Kombi-Ladestationen, mannigfaltige Voraussetzungen oder Kriterien erfüllen. So müssen sie beispielsweise, nicht zuletzt wegen der steigenden angebotenen Stromleistungen und der somit höheren Abwärme der elektrischen und elektronischen Bauteile, aber auch bei hohen Außentemperaturen und/oder bei direkter Sonneneinstrahlung im Inneren innerhalb eines vorgegebenen Temperaturfensters bleiben. Üblicherweise werden hierfür Lüftungsgitter und Ventilatoren bzw. Lüfter verwendet, die Ersteren erlauben aber auch das Eindringen von Staub und Schmutz und die Letzteren bedingen ein Temperaturmanagement und verbrauchen Strom.

Die Offenlegungsschrift DE 10 2018 212 978 A1 offenbart eine an einer Wand montierte Wallbox, bei der zwei getrennte Luftkühlkreisläufe beschrieben werden, teilweise zwischen einem Basiskörper und einem Gehäuse angeordnet. Die Zirkulation der Luft erfolgt mittels Ventilatoren.

Weiterhin, nicht zuletzt vor dem Hintergrund der Sicherheit vor Stromschlägen, ist das Trockenhalten der Ladestation bei Regen, Schnee und Nebel oder auch gegen Kondenswasser wichtig, sowohl das Innere der Ladestation betreffend, als auch die Bedienelemente wie etwa Stecker, Steckplätze, Ladekabel und Interfaces oder Displays. Plane Dachflächen, auf denen das Regenwasser stehen oder auf denen sich Schnee aufhäufen kann, sind nachteilig, genauso wie einfach nur gerade Vertikalflächen eines Außenkorpus der Ladesäule, an denen das Wasser herunterfließen kann. Auch simple Vorsprünge mit geneigten Flächen, aus diesen Vertikalflächen heraus, geben nur wenig Schutz gegen Nässe und Tropfwasser.

Weiterhin üblicherweise weisen herkömmliche Ladestationen einen oder mehrere Steckplätze auf, in denen der passende Ladestecker bei Nichtbetrieb "versorgt" ist. Wirklich zuverlässig gegen Nässe und Tropfwasser sind der Steckplatz und der Kopf des Ladesteckers dadurch aber noch nicht geschützt. Nachteilig ist weiterhin bei dieser Anordnung, dass ein Kunde, der es vorzieht, das eigene Ladekabel seines Elektrofahrzeugs zu verwenden, den Ladestecker der Ladestation aus seinem Steckplatz herausziehen muss, den eigenen Ladestecker seines mitgebrachten Ladekabels in den Steckplatz einstecken muss und dadurch nun mit dem bis zu 3,50 m langen Ladekabel der Ladestation in der Hand dasteht und nicht weiß, wohin damit. Falls keine Extra-Halterung an der Kombi-Ladestation dafür vorgesehen ist, wird er das Ladekabel mit dem offenen Ladestecker auf den Boden legen. Und eine simple Halterung wiederum, an welcher der nicht verwendete, offene Ladestecker für die Dauer des Ladevorgangs gehalten ist, birgt die Gefahr, dass der Kunde bei der Beendigung des Ladevorgangs und nach dem Ausstecken seines eigenen Ladesteckers den Ladestecker der Ladestation nicht an seinen Steckplatz zurückversorgt. Es kommt darüber hinaus auch vor, dass Kunden zwar das Ladekabel der Ladestation verwenden, es aber nach Gebrauch aus Nachlässigkeit einfach am Boden liegen lassen.

In Ladestecker, die auf den Boden gelangen, können ungewollt Fremdkörper eindringen. Leider jedoch kommt es darüber hinaus aber auch immer wieder vor, dass die Ladestecker oder aber auch die Steckplätze Ziel von Vandalismus sind und deren Öffnungen mit Steinchen, Stöckchen, Kaugummi, Kugelschreibern oder vielem Sonstigem verstopft werden.

Weiterhin nachteilig ist bei bekannten Ladestationen-Anordnungen, dass die an den Ladestationen angebrachten Ladekabel beispielsweise aufgrund des beinhaltenden Kupfers einen nicht unerheblichen Wert haben und manchmal gestohlen werden.

Die Aufgabe der vorliegenden Erfindung ist, eine universelle bzw. sogenannte Kombi-Ladestation zu stellen, welche die oben genannten Kriterien auf verbesserte Weise erfüllt. Die Nachteile bekannter Kombi-Ladestationen sollen wenn möglich komplett oder weitgehend eliminiert sein.

Die Lösung der Aufgabe besteht zunächst in der Konzeption eines Außenkorpus der erfindungsgemäßen Kombi-Ladestation, der in einem unteren Bereich sowie in einem oberen Bereich Lüftungsöffnungen aufweist. Darüber hinaus umhüllt der Außenkorpus einen Innenkorpus so, dass zwischen der Innenwand des Außenkorpus und der Außenwand des Innenkorpus ein Luftzwischenraum übrig bleibt. Die Summe der Merkmale dieser erfindungsgemäßen Anordnung gewährleistet, dass in dem Luftzwischenraum befindliche Luft beim Erwärmen aufsteigt, durch die oberen Lüftungsöffnungen entweicht und so im Inneren der Kombi-Ladestation einen kühlenden Sog bzw. eine kühlende Zirkulation von Frischluft erzeugt, angesogen durch die unteren Lüftungsöffnungen. Man kann somit von einem zweckentfremdeten Kamineffekts-Prinzip sprechen, zweckentfremdet insofern, als dass keine verbesserte Verbrennung, sondern eine Belüftung und Kühlung erreicht wird, vorzugsweise sogar ganz ohne elektrisch angetriebene Ventilatoren oder Lüfter.

Des Weiteren wurde festgestellt, dass der Aufwärtssog bzw. die Zirkulation der Zwischenluft nochmals verbessert ist, wenn vorzugsweise etwa im mittleren Bereich der beschriebenen Anordnung ein sich verjüngender Innendurchmesser der Innenwand des Außenkorpus vorgesehen wird. Man kann so von einer "Taillierung" des Außenkorpus sprechen, die nur im Inneren an der Außenkorpus-Innenwand realisiert sein kann, oder aber auch außen, d.h., der Außenkorpus kann auch eine konstante Wandmaterialdicke aufweisen, übrigens bevorzugt aus einem glasfaserverstärkten Kunststoff, der weiterhin vorzugsweise nicht ölbasiert hergestellt und wiederverwertbar ist. Jedenfalls wäre bei konstanter Wandmaterialdicke des Außenkorpus auch der Außenaspekt bzw. das Design einer erfindungsgemäßen Kombi-Ladestation tailliert. Der auf diese Weise weiterhin erfindungsgemäß nochmals verbesserte Aufwärtssog und eine dadurch nochmals verbesserte Kühlung im Inneren der erfindungsgemäßen Kombi-Ladestation ist prinzipiell dem sogenannten Venturi- oder Bernoulli-Effekt geschuldet, der ja vereinfacht besagt, dass die Durchströmungsgeschwindigkeit eines Fluids oder Strömungsgases, wie z.B. auch Luft, beim Durchströmen durch einen sich vermindernden Strömungsdurchmesser zunimmt.

Weiterhin noch die Formgestaltung einer erfindungsgemäßen Kombi-Ladestation betreffend, weist sie in einer bevorzugten Ausgestaltung eine Dachfläche bzw. einen Deckel auf, die bzw. der gewölbt oder geneigt ist und weiterhin vorzugsweise mit einer kleinen Ablaufkante oder -rinnenkontur ausgestattet ist. Eine etwa zur stärksten Sonneneinstrahlung hin ausgerichtete geneigte Dachfläche ist nebst der etwa gleich ausgerichteten Außenwand der Kombi-Ladestation übrigens auch am besten dafür geeignet, ein kleines Solarpaneel zu tragen oder zu integrieren, das die Stromversorgung der Kombi-Ladestation beispielsweise für ihren Standby-Betrieb bereits sicherstellt. Ein weiterer Vorteil einer gewölbten oder geneigten Dachfläche ist, dass sie nicht als Abstellfläche für Getränkedosen, Flaschen oder Müll oder aber auch für Portemonnaies oder Handys taugt.

Eine bevorzugte Ausgestaltungsvariante einer erfindungsgemäßen Kombi-Ladestation sieht vorzugsweise keine an ihr angeordneten Ladekabel vor, sondern nur Steckplätze. Lediglich als Reserve kann ein Ladestecker an einem Ladekabel vorgesehen sein, dann aber vorzugsweise - wie von Zapfsäulen bekannt - im Inneren der Kombi-Ladestation oder im Inneren eines vorzugsweise unterirdisch angeordneten Gehäuses aufgerollt.

Weiterhin ist es vorgesehen, die Steckplätze nicht nur mit einer Schutzklappe zu versehen, sondern mit einer Schiebetür, vorzugsweise mittels je eines oder je zweier Stellmotoren pro Schiebetür bzw. pro Steckplatz motorisch so gesteuert, dass sie sich nur dann öffnet, wenn der Kunde und sein Ladewunsch zweifelsfrei identifiziert wurde. Der Schließmechanismus der Schiebetüren kann hierfür schienen- oder zahnstangengeführt sein und wird im Folgenden mittels einer Figur in einer bevorzugten Ausgestaltungsvariante noch im Detail gezeigt. Der Schließmechanismus sieht weiterhin vorzugsweise eine relativ zur Außenwand des Außenkorpus innenliegende Öffnungsposition der Schiebetür vor und eine Schließposition, in der die Schiebetür bündig mit der Außenwand des Außenkorpus zu liegen kommt. Des Weiteren ist es optional vorgesehen, während des Ladevorgangs, also bei eingestecktem Ladestecker, die Schiebetür im Inneren des Außenkorpus von oben herunter mittels ihres oder ihrer Stellmotoren an den eingesteckten Ladestecker in eine ihn fixierende, arretierende oder sogar blockierende Position heranzufahren.

Aufgrund der Identifikation des Kunden und des gewünschten oder vielmehr zu seinem Elektrofahrzeug passenden Ladevorgangs wird erfindungsgemäß auch nur diejenige Schiebetür geöffnet, die den dahinter liegenden passenden Steckplatz freigibt.

Die Identifikation des Kunden kann WiFi-basiert mittels seines Smartphones erfolgen. Als andere Übertragungsarten kommen aber auch Bluetooth^{®}, NFC, IOT oder Mobilfunk in Betracht. Des Weiteren wäre eine QR-basierte App möglich, sei es durch einen ladestationseitigen, oder durch einen smartphoneseitigen QR-Scanner. Des Weiteren kommen zur Identifikation, aber auch zur Kommunikation zwischen Kombi-Ladestation und Kunde oder zwischen Kombi-Ladestation und Fahrzeug oder zwischen Kombi-Ladestationen unter sich auch WLAN und das sogenannte Internet of Things (IOT) sowie Radar oder Lidar, Mikrofone, Tast-Systeme oder Sensoren in Betracht. Als Letztere kommen beispielsweise auch Gyrosensoren in Betracht, die z.B. bei einem bestimmten, gespeicherten Bewegungsmuster ein Sendesignal oder Funksignal erzeugen, vorzugsweise in der übertragungssicheren Ultra Wide Band (UWB) Funktechnik.

Des Weiteren kommen als Sensoren auch Distanz- und Infrarot-Sensoren an einer erfindungsgemäßen Kombi-Ladestation in Betracht, nicht nur für Distanzmessungen zu einem auftauchenden Objekt oder zur Erfassung einer Bewegung dieses Objekts vor der Kombi-Ladestation, sondern beispielsweise auch für das Merkmal, die in einem stromfreien oder zumindest stromreduzierten Ruhemodus befindliche Ladestation in einen betriebsbereiteren Standby- oder komplett aktiven Betriebsmodus hochzufahren, aber eben erst, sobald eine hinreichend relevante Bewegung vor der Kombi-Ladestation erfolgt.

Damit aber auch eine Identifikation ohne Smartphone funktionieren kann, ist an einer erfindungsgemäßen Kombi-Ladestation auch ein Interface und ein Display für die Eingabe eines PIN-Codes oder die Erfassung einer NFC Chip Card vorgesehen. Des Weiteren eine oder mehrere Kameras, die ebenfalls eine smartphonefreie Identifikation ermöglichen. Dieses kann beispielsweise erfolgen, indem eine Gesichtserkennung-Software hinterlegt ist, vorzugsweise, ohne auf eine generelle Gesichtserkennung zuzugreifen, sondern nur auf eine vorher in dem System ausdrücklich gespeicherte. Es werden jedenfalls alle Datenschutzrichtlinien strengstens berücksichtigt. Die Kameras wären auch in der Lage, das Kennzeichen und den Typ des Fahrzeugs per Bilderkennung zu erfassen. Des Weiteren wäre es weiterhin erfindungsgemäß möglich, den Ladestecker des Fahrzeugs in die Kamera zu halten, worauf ebenfalls mittels Bilderkennung der passende Ladevorgang zur Verfügung gestellt wird. Es wäre des Weiteren gut möglich, darüber hinaus an dem Ladestecker kundenidentifizierende Codes wie etwa Farb-, QR-, Nummern- oder Strichcodes anzubringen.

Eine weiterhin bevorzugte Ausgestaltungsvariante einer erfindungsgemäßen Kombi-Ladestation sieht die nötigen Anschlüsse und Steuerungen vor, um Bestandteil eines intelligenten Stromnetzes zu sein, eines sogenannten Smartgrids. Dies sieht u.a. vor, dass einerseits besonders günstiger oder besonders ökologischer Strom bezogen werden kann, andererseits aber auch, dass der Elektrospeicher, der gerade an der Kombi-Ladestation angehängt ist, seinen Strom dem Smartgrid zur Verfügung stellen kann, Stichwort bidirektionales Laden.

Nicht zuletzt für das Zurverfügungstellen oder aber auch "Bunkern" großer Strommengen oder zum Puffern von Stromspitzen im Smartgrid, ist eine erfindungsgemäße Kombi-Ladestation vorzugsweise mit einem oder mehreren Akkumulatoren und/oder Kondensatoren ausgestattet. In eine Kombi-Ladestation integrierte Kondensatoren eröffnen weiterhin erfindungsgemäß Möglichkeiten zu extremem Schnellladen, aber auch als Leistungsunterstützung oder als Redundanzen.

Eine erfindungsgemäße Kombi-Ladestation ist, wie oben bereits erwähnt, weniger mit an Ladekabeln befindlichen Ladesteckern ausgestattet, sondern mit Steckplätzen für Ladestecker, die am Elektrofahrzeug angeordnet sind. Und, wie ebenfalls oben bereits ausgeführt, werden die für den benötigten Ladevorgang passenden Steckplätze von automatisch bzw. motorisch betriebenen Schiebetüren freigegeben. Diesbezüglich ist auch eine optionale Ausgestaltungsvariante einer erfindungsgemäßen Kombi-Ladestation möglich, bei der zwar wie beschrieben sich eine entsprechende Schiebetür öffnet, aber der passende Steckplatz erstrecht wieder motorisch auf einer Trommel oder einem Schiebemechanismus der Öffnung zugestellt wird. Jedenfalls aber, egal ob mit fixen Steckplätzen oder zustellbaren, bietet eine erfindungsgemäße Kombi-Ladestation alle bekannten und gängigen Ladeanschlüsse und auch alle entsprechenden unterschiedlichen Ladungsarten bzw. -stärken.

Wie in Absatz [0001] bereits erwähnt, ist eine erfindungsgemäße Kombi-Ladestation auch als Basisstation für die Ausleihe und die Rückgabe von Elektrofahrzeugen konzipiert. Dieser Eigenschaft wird eine erfindungsgemäße Kombi-Ladestation einerseits durch die Vielzahl von Anschlüssen gerecht, aber insbesondere auch dem folgenden Merkmal: Es ist weiterhin erfindungsgemäß nämlich vorgesehen, zusätzlich zu eigentlich im Metier bereits bekannten elektronischen Sperren hierfür, den Ladestecker in dem Steckplatz auch mechanisch zu sperren. Diese Sperrvorrichtung umfasst einen oder mehrere Arretierstifte, der oder die, mittels Aktuatoren oder Stellmotoren betrieben, in korrespondierende Öffnungen in der Ladestecker-Muffe hinein- und auch wieder herausfahrbar sind. Solche Öffnungen sind an allen gängigen Ladesteckern sowieso bereits vorhanden. Die Arretierstifte können gemäß einer Ausgestaltungsvariante federbewehrt sein, sodass das Einstecken des Ladesteckers in die gesperrte Position einfach unter der Überwindung der Federkraft erfolgt, ohne dass die Aktuatoren oder Stellmotoren aktiv werden müssen. Erst bei dem Entsperren der erfindungsgemäßen Sperrvorrichtung erfolgt ein Aktivwerden der Aktuatoren oder Stellmotoren durch ein Zurückfahren der Arretierstifte, erneut gegen den Widerstand der Federkraft.

Die beschriebene erfindungsgemäße Sperrvorrichtung bietet einer Elektrofahrzeuge vermietenden Gesellschaft endlich eine Handhabe gegen unberechtigtes Entfernen des Elektrofahrzeugs von der Ladestation einerseits, aber andererseits auch eine zuverlässig erfassbare Rückgabe einzig und allein nur an dem oder einem hierfür vorgesehenen Ort. Wenn nun auf diese Weise klar definierbar ist, zu welchem Zeitpunkt die Mietdauer beginnt und wann sie endet, nämlich erst bei erfolgreichem Zurücksperren in die Sperrvorrichtung, könnte man vielleicht der Unsitte Herr werden, insbesondere Elektroscooter nach Gebrauch unachtsam irgendwo in der Stadt, im Wald oder im Fluss zu "entsorgen".

Darüber hinaus bietet die beschriebene erfindungsgemäße Sperrvorrichtung erhöhte Sicherheit. Es ist nämlich nicht mehr möglich, einen laufenden Ladevorgang zu stören oder zu unterbrechen und somit einen einwandfreien Ladevorgang zu gewährleisten, ohne zuerst die fixierenden Arretierstifte zu entsperren. Außerdem ist ein die Sicherheit erhöhender Zwischenschritt in den Ladevorgang geschaltet, bei dem die Spannung abschaltbar ist. Die Ladestecker können dadurch abgezogen werden, ohne wie bisher noch unter Spannung zu stehen. Des Weiteren ist es vorgesehen, dass die Sperrvorrichtung auch bei Stromausfall in ihrem jeweiligen gesperrten oder entsperrten Status verbleibt.

An einer erfindungsgemäßen Kombi-Ladestation ist vorzugsweise mindestens ein Display angeordnet und wenn mindestens zwei, dann weiterhin vorzugsweise gegenüberliegend. Somit sollen zwei Verbraucher gleichzeitig die Kombi-Ladestation bedienen können oder aber auch ein Verbraucher dasjenige Display auswählen können, welches ihm von Position oder Lichteinfall angenehmer ist. Darüber hinaus sollen die erfindungsgemäßen Kombi-Ladestationen auf mehrreihigen Parkplätzen anordenbar sein, also von mindestens zwei Seiten zugänglich. Die Displays sind vorzugsweise hochauflösend, optional berührungsempfindlich und farbig, damit auch farblich kodierte Informationen angezeigt oder eingegeben werden können. Weiterhin vorzugsweise kommen moderne OLED-Displays in Betracht, die auch Minusgrade verkraften.

Vorzugsweise ebenfalls in zweifacher und gegenüberliegender Anordnung sind Beleuchtungen vorgesehen. Sie sind vorzugsweise als blendfreie Beleuchtungsbalken ausgestaltet und beleuchten das Umfeld der Kombi-Ladestation vorzugsweise nur bei Bedarf, beispielsweise getriggert durch den beschriebenen passiven Infrarot-Sensor. Der bevorzugte Beleuchtungsbalken kann optional auch in unterschiedlichen Farben leuchten, sodass signalisiert werden kann, wann die Kombi-Ladestation frei, besetzt oder außer Funktion ist oder ein Ladevorgang beendet ist. Auch die Steckplätze bzw. die Schiebetürchen einer erfindungsgemäßen Kombi-Ladestation können mit sie umgebenden Ringen beleuchtet sein und weiterhin vorzugsweise ebenfalls mit unterschiedlichen Farben ihre jeweilige Funktion anzeigen. Die zweifache und gegenüberliegende Anordnung der Beleuchtungsbalken und auch der Displays ist optional und kommt bei einer erfindungsgemäßen Wallbox weniger in Betracht.

Eine erfindungsgemäße Kombi-Ladestation ist vorzugsweise mit einer fluoreszierenden Folie beklebt oder mit einer solchen Farbe angestrichen oder es sind sogar fluoreszierende Partikel in das Material des Außenkorpus eingearbeitet.

Die Vielzahl der beschriebenen Sensoren und Erkennungssysteme würde es ermöglichen, ein autonom fahrendes Elektrofahrzeug zu erfassen, das sich der erfindungsgemäßen Kombi-Ladestation genähert hat oder sogar von ihr herangelotst worden ist. Für diesen Fall umfasst eine erfindungsgemäße Kombi-Ladestation mindestens einen Roboterarm, der kamera- und sensorbasiert den Ladestecker des Elektrofahrzeugs aufnimmt und ihn in den passenden Steckplatz einsteckt. Allerdings bleibt auch ein berührungsfreier Ladevorgang mittels Induktion möglich.

Der Sockel einer erfindungsgemäßen Kombi-Ladestation umfasst vorzugsweise ein feststellbares Kugelgelenk an einem leitenden erdenden Befestigungspfahl, sodass beim Setzen einer erfindungsgemäßen Kombi-Ladestation die Notwendigkeit einer separaten Erdung sowie des Gießens eines Betonsockels entfällt, der je nach einer jeweiligen Geländeausrichtung horizontal sein muss und dadurch eine senkrechte Montage der Ladestation erst ermöglicht.

Eine erfindungsgemäße Kombi-Ladestation ist so ausgestattet, dass mindestens ein oder eben alle Module mindestens einen sogenannten TPM-Chip umfassen. So ein Trusted Platform Module ist ein Chip, der die Geräte um grundlegende Sicherheitsfunktionen erweitert. Änderungen an einem so geschützten System können nur unter der Freigabe und der Konfiguration durch den Hersteller erfolgen.

Ein erfindungsgemäßes System ist kamerabasiert. Auf diese Weise kann eine Prüfung der Stecker und Kabel erfolgen. Dieses bezieht sich nicht nur auf seine Art, sondern auch seinen Abnutzungsgrad oder Verschmutzungen oder Beschädigungen. Die der Kamera zugrundeliegende Software könnte weiterhin erfindungsgemäß auch die Abnutzung der Kontakte überprüfen, beispielsweise durch das Erkennen des Schwärzegrades von Verschmorungen oder generell durch das Erkennen von Verfärbungen.

Ebenfalls kamerabasiert ist es vorgesehen, eine automatische Parkplatzüberwachung vorzunehmen. Vorzugsweise mittels einer Leitzentrale kann es vorgesehen sein, Nutzer zu freien Parkplätzen zu lotsen. Ebenfalls vorzugsweise mittels einer Leitzentrale kann eine erfindungsgemäße Kombi-Ladestation überwacht sein und somit z.B. gegen Vandalismus und Missbrauch geschützt sein.

Für die Kamera können spezielle Softwares hinterlegt sein, die Gestik und Bewegungen eines Nutzers erfassen können. Somit wären Interaktionen zwischen Nutzer und Station steuerbar.

Das Display und auch der Außenkorpus kann als Werbe- oder Informationstafel ausgestaltet sein, also eine Art "moderne Litfaßsäule".

Eine bevorzugte Ausgestaltungsvariante einer erfindungsgemäßen Kombi-Ladestation ist mit allen erdenklichen Sensoren für Umwelt- und Geodaten ausgestattet. Dieses können z.B. Sensoren sein für Temperatur, Wind, Luftfeuchtigkeit, Pollen, Lärm, UV, Vibrationen, Erschütterungen sowie Erdstöße, Stickstoff, Ozon, Feinstaub, Stickstoffdioxid, Kohlenmonoxid und Schwefeldioxid usw.

Die vorliegende Anmeldung offenbart ein erstes Verfahren zur Anwendung einer wie offenbarten Kombi-Ladestation mit mindestens einem motorisch betätigten Schiebetür-Schließmechanismus für mindestens einen verschließbaren Steckplatz, mit mindestens einer mechanischen Sperrvorrichtung an dem Steckplatz, und mit mindestens einem WiFi-Modul für die Kommunikation mit einer Smartphone-App, unter der Ausführung der folgenden grundsätzlichen Verfahrensschritte:
a) - Erfassen einer Bewegung im Umfeld der Kombi-Ladestation, im Erfassungsradius mindestens eines passiven Infrarot-Senders der Kombi-Ladestation;
b) - Einschalten mindestens eines Distanzsensors der Kombi-Ladestation;
c) - Durchführen von Distanzmessungen zu dem bewegten Objekt, zur Selektion nur relevanter bewegter Objekte;
d) - Hochfahren bzw. Einschalten der Kombi-Ladestation von einem stromfreien oder -reduzierten Standby-Betrieb in einen betriebsbereiten Zustand, falls die Distanzmessung unter dem Verfahrensschritt c) zum Ergebnis geführt hat, dass ein relevantes Objekt die Bewegung vor der Kombi-Ladestation verursacht hat;
e) - Ansteuern eines WiFi-Moduls der Kombi-Ladestation und Erfassen der Daten der Smartphone-App eines Kunden;
f) - Abgleichen der erfassten Daten mit einer Datenbank;
g) - Auswählen und Ansteuern des Steckplatzes mit dem passenden Ladevorgang;
h) - Betätigen des Schiebetür-Schließmechanismus zum Bewegen einer Schiebetür des ausgewählten Steckplatzes in eine Öffnungsposition der Schiebetür;
i) - falls erforderlich, Entsperren der mechanischen Sperrvorrichtung durch radiales Ausfahren von Arretierstiften mittels Aktuatoren;
j) - Aufnehmen des Ladesteckers in dem Steckplatz;
k) - Versperren der mechanischen Sperrvorrichtung durch radiales Einfahren der Arretierstifte mittels der Aktuatoren;
l) - Herunterfahren der Schiebetür an die Muffe des eingesteckten Ladesteckers;

m) - Starten einer Kommunikation zwischen der Kombi-Ladestation und dem Batterie-Managementsystem des Elektrofahrzeugs;
n) - Starten des Ladevorgangs;
o) - Beenden des Ladevorgangs;
p) - Beenden der Kommunikation zwischen der Kombi-Ladestation und dem Batterie-Managementsystem des Elektrofahrzeugs;
q) - Hochfahren der Schiebetür von der Muffe des eingesteckten Ladesteckers;
r) - Entsperren der mechanischen Sperrvorrichtung durch radiales Ausfahren der Arretierstifte mittels der Aktuatoren;
s) - Freigeben des Ladesteckers aus dem Steckplatz;
t) - sensorbasiertes Erfassen des Wegfahrens des Elektrofahrzeugs;
u) - Betätigen des Schiebetür-Schließmechanismus zum Verschließen der Schiebetür des Steckplatzes;
v) - Herunterfahren resp. Ausschalten der Kombi-Ladestation vom betriebsbereiten Zustand in den stromfreien oder zumindest stromreduzierten Standby-Betrieb, falls das Erfassen unter dem Verfahrensschritt r) zum Ergebnis geführt hat, dass das Elektrofahrzeug weggefahren ist.

Die vorliegende Anmeldung offenbart ein zweites Verfahren zur Anwendung einer wie offenbarten Kombi-Ladestation mit mindestens einem motorisch betätigten Schiebetür-Schließmechanismus für mindestens einen verschließbaren Steckplatz, mit mindestens einer mechanischen Sperrvorrichtung an dem Steckplatz, und mit mindestens einer Kamera, unter der Ausführung der folgenden grundsätzlichen Verfahrensschritte:
a') - Erfassen einer Bewegung im Umfeld der Kombi-Ladestation, im Erfassungsradius mindestens eines passiven Infrarot-Senders der Kombi-Ladestation;
b') - Einschalten mindestens eines Distanzsensors der Kombi-Ladestation;
c') - Durchführen von Distanzmessungen zu dem bewegten Objekt, zur Selektion nur relevanter bewegter Objekte;
d') - Hochfahren bzw. Einschalten der Kombi-Ladestation von einem stromfreien oder -reduzierten Standby-Betrieb in einen betriebsbereiten Zustand, falls die Distanzmessung unter dem Verfahrensschritt c') zum Ergebnis geführt hat, dass ein relevantes Objekt die Bewegung vor der Kombi-Ladestation verursacht hat;
e') - Erfassen eines Kennzeichens eines Elektrofahrzeugs oder eines Ladesteckers eines Elektrofahrzeugs, mittels Bilderkennung durch die Kamera;
f') - Abgleichen der erfassten Daten mit einer Datenbank;
g') - Auswählen und Ansteuern des Steckplatzes mit dem passenden Ladevorgang;
h') - Betätigen des Schiebetür-Schließmechanismus zum Bewegen einer Schiebetür des ausgewählten Steckplatzes in eine Öffnungsposition der Schiebetür;
i') - falls erforderlich, Entsperren der mechanischen Sperrvorrichtung durch radiales Ausfahren von Arretierstiften mittels Aktuatoren;
j') - Aufnehmen des Ladesteckers in dem Steckplatz;
k') - Versperren der mechanischen Sperrvorrichtung durch radiales Einfahren der Arretierstifte mittels der Aktuatoren;
1') - Herunterfahren der Schiebetür an die Muffe des eingesteckten Ladesteckers;
m') - Starten einer Kommunikation zwischen der Kombi-Ladestation und dem Batterie-Managementsystem des Elektrofahrzeugs;
n') - Starten des Ladevorgangs;
o') - Beenden des Ladevorgangs;
p') - Beenden der Kommunikation zwischen der Kombi-Ladestation und dem Batterie-Managementsystem des Elektrofahrzeugs;
q') - Hochfahren der Schiebetür von der Muffe des eingesteckten Ladesteckers;
r') - Entsperren der mechanischen Sperrvorrichtung durch radiales Ausfahren der Arretierstifte mittels der Aktuatoren;
s') - Freigeben des Ladesteckers aus dem Steckplatz;
t') - sensor- bzw. kamerabasiertes Erfassen des Wegfahrens des Elektrofahrzeugs;
u') - Betätigen des Schiebetür-Schließmechanismus zum Verschließen der Schiebetür des Steckplatzes;
v') - Herunterfahren resp. Ausschalten der Kombi-Ladestation vom betriebsbereiten Zustand in den stromfreien oder zumindest stromreduzierten Standby-Betrieb, falls das Erfassen unter dem Verfahrensschritt r') zum Ergebnis geführt hat, dass das Elektrofahrzeug weggefahren ist.

Eine erfindungsgemäße Kombi-Lade- bzw. Basisstation bringt die folgenden Vorteile:
- Die Kühlung der Kombi-Ladestation ist insofern verbessert, als dass sie ohne Strom verbrauchende Ventilatoren oder Lüfter und ohne ein sie steuerndes Temperaturmanagement auskommt.
- Die Form des Daches ist optimiert, weil kein Regenwasser oder Schnee drauf stehen oder liegen kann und es auch nicht als Abstellfläche verwendet werden kann.
- Im Dach oder auch in der Außenwand kann ein Solarpaneel angeordnet oder integriert sein, mit Hilfe dessen die Stromversorgung für den Standby-Betrieb oder auch mehr bereits gewährleistet sein kann.
- Eine erfindungsgemäße Kombi-Ladestation ist besser gegen Witterung geschützt, insbesondere die spannungsführenden Teile sind keinem Spritz- und Tropfwasser ausgesetzt.
- Das Risiko von Stromschlägen ist deutlich minimiert.
- Der Gebrauch von schadhaften Ladekabeln oder deren unsachgemäße Handhabe wie z.B. am Boden liegen lassen sind gar nicht mehr möglich.
- Ladestecker oder Steckplätze sind keinem möglichen Vandalismus durch Beschädigung oder Verstopfen der Kontakte mehr ausgesetzt.
- Das Stehlen eines Ladekabels ist nicht mehr möglich.
- Die Steckplätze sind nicht offen, sondern mittels einer dichtenden Schiebetür geschützt und gesichert.
- Der Sitz eines in den Steckplatz eingesteckten Ladesteckers ist gesichert und verbessert durch die Schiebetür, die auf seine Muffe heruntergefahren ist.
- Es wird nur derjenige Steckplatz geöffnet, der für den bevorstehenden Ladevorgang auch benötigt wird, die anderen bleiben geschützt und gesichert.
- Eine erfindungsgemäße Kombi-Ladestation beherrscht alle erdenklichen Kommunikationsarten und bietet alle gängigen Anschluss- und Ladungsarten.
- Eine erfindungsgemäße Kombi-Ladestation bietet auch mindestens eine Kunden-Identifikationsmöglichkeit ohne Smartphone.
- Eine erfindungsgemäße Kombi-Ladestation ist mit einem Smartgrid vernetzt.
- Falls vorgesehen, umfasst eine erfindungsgemäße Kombi-Ladestation Akkumulatoren oder/und Kondensatoren für Schnellladen oder/und als Puffer.
- Falls vorgesehen, bietet die mechanische Sperre des Ladesteckers in dem Steckplatz einerseits erhöhte Sicherheit und andererseits eine verbesserte Handhabe bei der Ausleihe und der Rückgabe.
- Falls vorgesehen, ist eine erfindungsgemäße Kombi-Ladestation aufgrund von zwei gegenüberliegend angeordneten Displays universell aufstell- bzw. platzierbar.
- Eine erfindungsgemäße Kombi-Ladestation ist gut beleuchtet und darüber hinaus zeigt die Beleuchtung oder die Beleuchtungen Funktionen oder Betriebsmodi an.
- Eine erfindungsgemäße Kombi-Ladestation ist fluoreszierend und somit bei fremdem Lichteinfall gut sichtbar, ohne Strom für die eigene Beleuchtung verbraucht zu haben.
- Falls vorgesehen, ist eine erfindungsgemäße Kombi-Ladestation für autonom fahrende Elektrofahrzeuge gerüstet.
- Eine erfindungsgemäße Kombi-Ladestation benötigt keinen Betonsockel im Boden mit einer im Wasser ausgerichteten Oberfläche.

Die offenbarten unterschiedlichen Ausgestaltungsvarianten einer erfindungsgemäßen Kombi-Ladestation sind miteinander kombinierbar. So sind beispielsweise die Ausgestaltungsvarianten mit oder ohne Taillierung nach Belieben und reziprok mit den unterschiedlichen Ausgestaltungsvarianten einer erfindungsgemäßen Kombi-Ladestation mit oder ohne dem beschriebenen Schiebetür-Schließmechanismus kombinierbar und dieses alles wiederum mit den unterschiedlichen Ausgestaltungsvarianten einer weiterhin erfindungsgemäßen Kombi-Ladestation mit oder ohne der beschriebenen mechanischen Sperre. Das Gleiche gilt nach Belieben wahlweise und reziprok für die unterschiedlichen Ausgestaltungsvarianten mit oder ohne Solarpaneel, mit oder ohne den bündig schließenden Schiebetüren, mit der smartphone- oder der kamerabasierten Kundenidentifikation oder der Ausgestaltungsvariante mit den gegenüberliegenden Displays oder derjenigen mit dem feststellbaren Kugelgelenk im Sockel.

Weitere oder vorteilhafte Ausgestaltungen einer erfindungsgemäßen Kombi-Lade- bzw. Basisstation bilden die Gegenstände der abhängigen Ansprüche.

Die Bezugszeichenliste ist Bestandteil der Offenbarung.

Anhand von Figuren wird die Erfindung symbolisch und beispielhaft näher erläutert. Die Figuren werden zusammenhängend und übergreifend beschrieben. Sie stellen schematische und beispielhafte Darstellungen dar und sind nicht maßstabsgetreu, auch in der Relation der einzelnen Bestandteile zueinander nicht. Gleiche Bezugszeichen bedeuten das gleiche Bauteil, Bezugszeichen mit unterschiedlichen Indizes geben funktionsgleiche oder ähnliche Bauteile an.

Es zeigen hierbei
Fig. 1 eine symbolische und beispielhafte Ansicht einer bekannten Kombi-Ladestation gemäß Stand der Technik, mit den drei gängigsten Steckertypen CHAdeMO, CCS und Typ 2, jeweils an einem Ladekabel der Kombi-Ladestation angeordnet und jeweils in einem entsprechenden Steckplatz eingesteckt bzw. versorgt;
Fig. 2 eine symbolische und beispielhafte perspektivische Ansicht einer erfindungsgemäßen Kombi-Ladestation, mit einem taillierten Außenkorpus;
Fig. 3 eine symbolische und beispielhafte Seitenansicht der erfindungsgemäßen Kombi-Ladestation aus der Fig. 2, mit beispielhaft drei beispielhaft angeordneten verschließbaren Steckplätzen;
Fig. 4 eine symbolische und beispielhafte Schnittansicht der erfindungsgemäßen Kombi-Ladestation aus den bisherigen Figuren 2 und 3, mit einem Innenkorpus, der von dem taillierten Außenkorpus umhüllt ist;
Fig. 5 eine symbolische und beispielhafte Darstellung des technischen Aufbaus eines verschließbaren Steckplatzes und eines entsprechenden Schließmechanismus und
Fig. 6 ein symbolische und beispielhafte Schnittdarstellung durch einen Steckplatz einer erfindungsgemäßen Kombi-Ladestation, der eine weiterhin erfindungsgemäße Sperrvorrichtung umfasst.

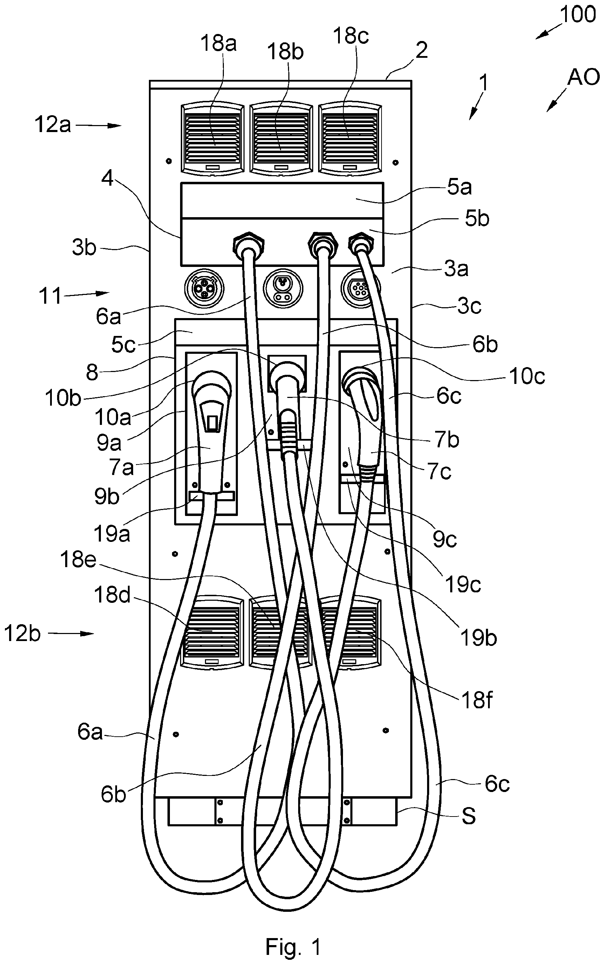

Die Fig. 1 zeigt in einer symbolischen und beispielhaften Ansicht eine Kombi-Ladestation 100 gemäß Stand der Technik, wie sie beispielsweise bei der Autobahnraststätte Medenbach West bei Wiesbaden, Deutschland, steht, symbolisch angedeutet als Aufstellungsort AO.

Es ist in dieser Fig. 1 ersichtlich, dass die Kombi-Ladestation 100 ein Außengehäuse oder einen Außenkorpus 1 aufweist, der wiederum einen Deckel oder eine plane Dachfläche 2 sowie Außenkorpus-Wände 3a-3c ausformt, genauer gesagt eine Frontwand 3a, eine linke Seitenwand 3b und eine rechte 3b. Der Außenkorpus 1 steht mit einem Sockel S auf dem Boden.

An der Frontwand 3a ist ein Vorsprung 4 angeordnet, der in einem oberen Bereich eine nach hinten aufwärts geneigte Fläche 5a sowie in einem unteren Bereich eine nach hinten abwärts geneigte Fläche 5b. An der Letzteren sind Ladekabel 6a-6c angeordnet, die jeweils in einer Schleife auf den Boden hängen und jeweils in einem Ladestecker 7a-7c enden, wobei der Ladestecker 7a ein sogenannter CHAdeMO-Ladestecker ist, der Ladestecker 7b ein sogenannter CCS-Ladestecker (Combined Charging System) und der Ladestecker 7c ein sogenannter Typ 2-Ladestecker. Die entsprechenden Ladeanschlüsse sind nicht nur an ihrer Form, sondern zusätzlich auch an Ladeanschluss-Symbolen 11 zu erkennen, die jeweils oberhalb eines entsprechend passenden Steckplatzes 10a-10c abgebildet sind.

Jeder der Ladestecker 7a-7c ist in seinem entsprechenden Steckplatz 10a-10c eingesteckt und aber zusätzlich noch von einem jeweiligen Halteblech 19a-19c gehalten.

Des Weiteren ist in dieser Fig. 1 noch ersichtlich, dass an der Frontwand 3a auch ein Aufsatz 8 angeordnet ist, der für jeden der Steckplätze 10a-10c jeweils ein Vertiefung 9a-9c ausformt, für eine mehr oder weniger geschützte bzw. versenkte Aufnahme des jeweiligen Ladesteckers 7a-7c. Dieser Aufsatz 8 formt des Weiteren in seinem oberen Bereich noch eine geneigte Fläche 5c aus.

Die Fig. 1 zeigt einerseits, durch eine hohe Anzahl von sechs Lüftungsgittern 18a-18f, angeordnet in zwei Lüftungsgitter-Reihen 12a und 12b, dass die Kombi-Ladestation 100 gemäß Stand der Technik einen hohen Kühlungsbedarf hat. Andererseits zeigt das Originalfoto, von dem diese Fig. 1 nachgezeichnet ist, dass der Schutz vor Tropfnässe ungenügend ist. Bei genauem Hinsehen sind auf dem Originalfoto nämlich überall Wassertropfen zu sehen, selbst an der nach hinten abwärts geneigten Fläche 5b des Vorsprungs 4 sowie selbst an den Ladesteckern 7a-7c, obwohl sie in den Vertiefungen 9a-9c versenkt angeordnet sind. Außerdem berühren die Ladekabel 6a-6c den feuchten und schmutzigen Boden.

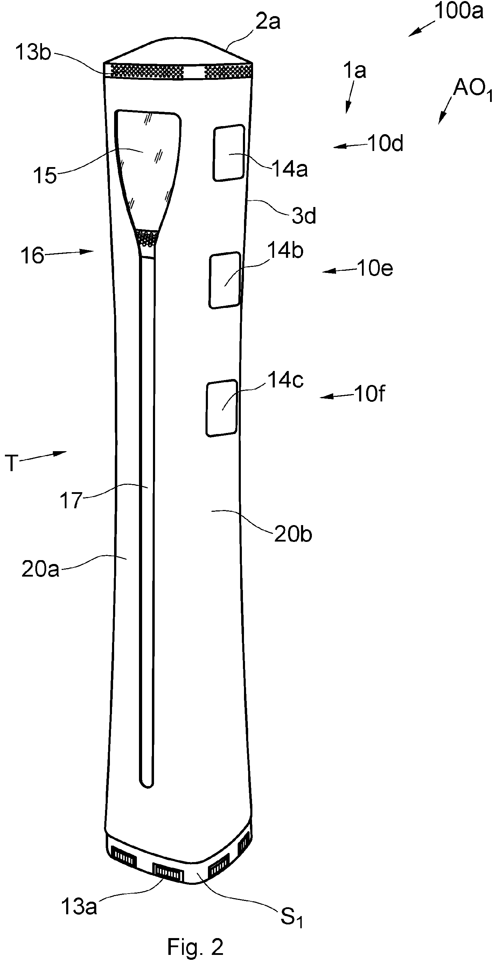

In der Fig. 2 ist in einer symbolischen und beispielhaften perspektivischen Ansicht eine erste Ausgestaltungsvariante einer erfindungsgemäßen Kombi-Ladestation 100a an einem lediglich symbolisch dargestellten, beliebigen Aufstellungsort AO₁ gezeigt. Wie eingangs bereis erwähnt, kann der Aufstellungsort AO₁ auch eine Wand sein. Die Hauptunterschiede, die abgesehen vom Innenleben und inhärenter technischer Eigenschaften aber sichtbar sind, zeigen sich in viererlei Hinsicht.

Erstens ist ein Außenkorpus 1a mittels einer Taillierung T tailliert und von einer Außenkorpus-Wand 3d gebildet, die unten von einem Sockel S₁ mit Lüftungsöffnungen 13a und oben von einer gewölbten Dachfläche 2a mit Lüftungsöffnungen 13b abgeschlossen ist.

Zweitens formt der Außenkorpus 1a bzw. die Außenkorpus-Wand 3d eine Korpusseite 20a aus, an der ein Display 15 mit einer Kamera 16 sowie einem senkrecht angeordneten Beleuchtungsbalken 17 angeordnet sind.

Einen dritten Hauptunterschied der erfindungsgemäßen Kombi-Ladestation 100a aus der Fig. 2 gegenüber der bekannten Kombi-Ladestation 100 gemäß Stand der Technik aus der Fig. 1 stellt dar, dass die erfindungsgemäße Kombi-Ladestation 100a keine Ladekabel und auch keine Ladestecker aufweist, sondern nur Steckplätze 10d-10f, die jeweils hinter einer Schiebetür 14a-14c an einer Korpusseite 20b angeordnet sind.

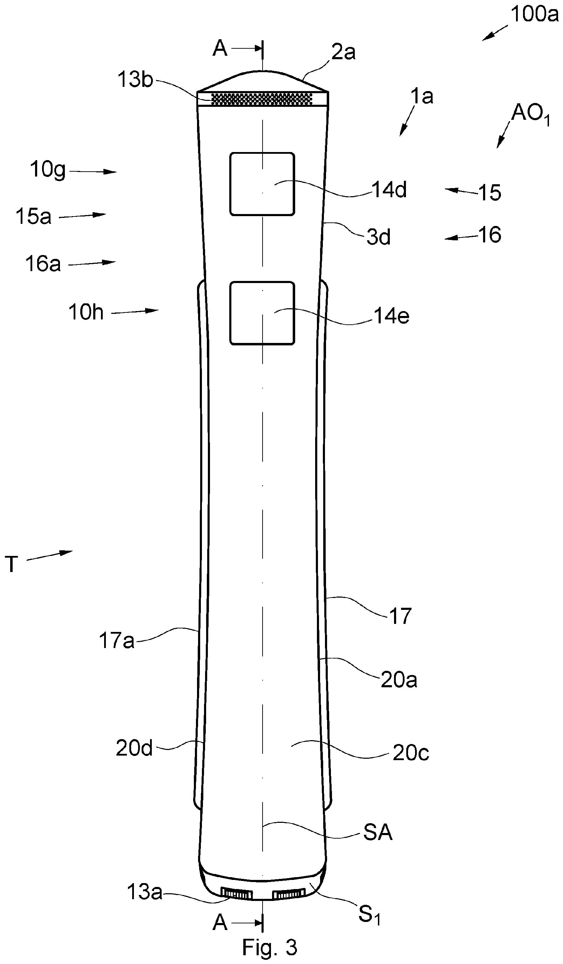

Die Fig. 3 zeigt die erfindungsgemäße Kombi-Ladestation 100a aus der vorhergehenden Fig. 2, allerdings von einer Korpusseite 20c, die der Korpusseite 20b aus der Fig. 2 gegenüberliegt. An dieser Korpusseite 20c sind zwei Steckplätze 10g und 10h hinter Schiebetüren 14d und 14e vorgesehen.

Des Weiteren ist ersichtlich, dass der Beleuchtungsbalken 17 an der Korpusseite 20a optional auch erhaben ausgestaltet sein kann, um einen verbesserten Beleuchtungswinkel zu bieten.

Weiterhin ist eine der Korpusseite 20a gegenüberliegende Korpusseite 20d vorzugsweise spiegelsymmetrisch zu einer Symmetrieachse SA ebenfalls mit einem Display 15a und einer Kamera 16a ausgestattet, beides lediglich mittels Pfeilen angedeutet, sowie einem ebenfalls erhabenen Beleuchtungsbalken 17a.

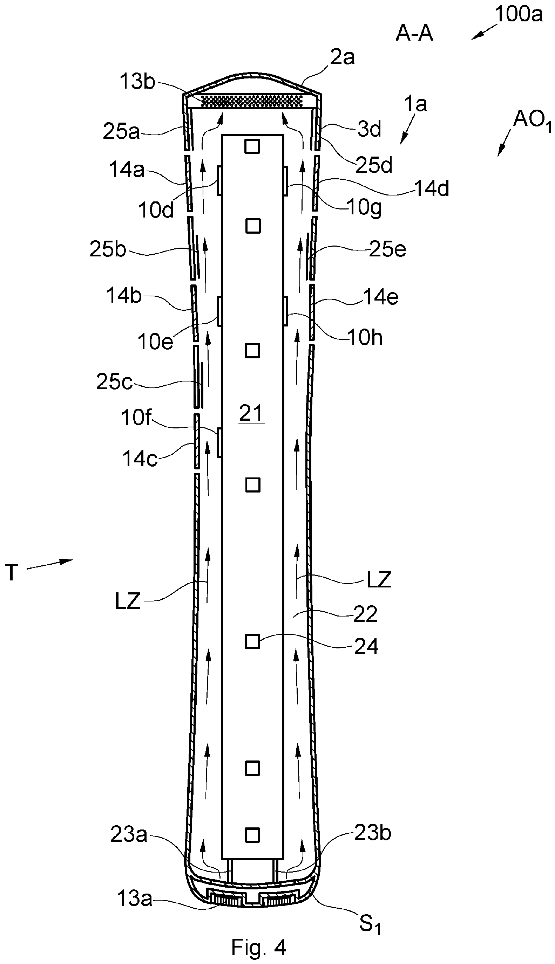

In der Fig. 4 ist erneut die erfindungsgemäße Kombi-Ladestation 100a aus den bisherigen Figuren 2 und 3 dargestellt, dieses Mal allerdings in einer Schnittansicht A-A, deren Ausrichtung in der Fig. 3 gezeigt ist. Man erkennt somit in dieser Fig. 4, dass der Außenkorpus 1a bzw. die Außenkorpus-Wand 3d einen Innenkorpus 21 so umhüllt, dass rundherum in einem Luftzwischenraum 22 eine kühlende Luftzirkulation LZ aufsteigend von den unteren Lüftungsöffnungen 13a hin zu den oberen Lüftungsöffnungen 13b herrscht.

Der Innenkorpus 21 steht vorzugsweise auf Sockelfüßen 23a und 23b und ist weiterhin vorzugsweise aus Metall gefertigt, mit Aussparungen 24.

Die bereits bekannten Schiebetüren 14a-14e sind in einer jeweiligen, mit der Außenkorpus-Wand 3d bündigen Schließposition gezeigt. Diese Schließpositionen entsprechen der Positionierung von jeweiligen Steckplätzen 10d-10h, die nur symbolisch angezeigt und vorzugsweise an dem Innenkorpus 21 angeordnet sind.

Ebenfalls nur symbolisch dargestellt ist oberhalb jeder Schiebetüre 14a-14e eine jeweilige Schiene 25a-25e. Diese Schienen 25a-25e und ein hier nicht näher dargestellter Schiebemechanismus bzw. Schiebetür-Schließmechanismus gewährleisten vorzugsweise eine jeweilige, relativ zur Außenkorpus-Wand 3d innenliegende Öffnungsposition der Schiebetüren 14a-14e, sowie weiterhin vorzugsweise die beschriebene Schließposition, die bündig mit der Außenkorpus-Wand 3d abschließt.

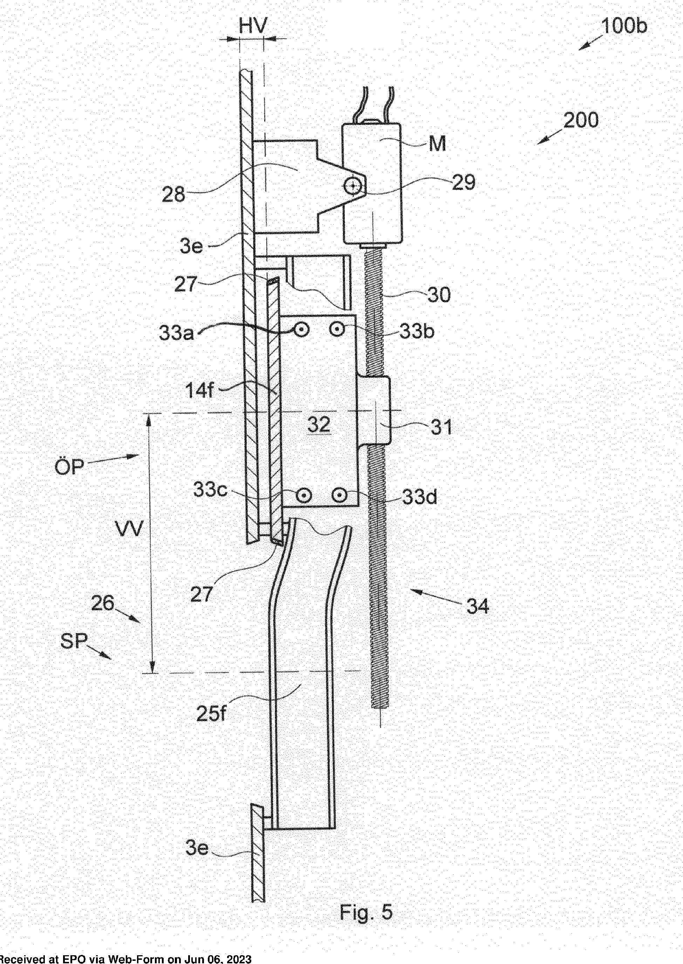

Die Fig. 5 zeigt eine bevorzugte Ausgestaltungsvariante einer erfindungsgemäßen Kombi-Ladestation 100b mit einem Schiebetür-Schließmechanismus 200 für einen Schließvorgang einer Schiebetür 14f aus einer dargestellten Öffnungsposition ÖP hinein in eine Schließposition SP innerhalb einer Schiebetür- bzw. Steckplatz-Öffnung 26. Diese Schiebetür- bzw. Steckplatz-Öffnung 26 befindet sich in einer Außenkorpus-Wand 3e gegenüber eines in dieser Figur nicht näher dargestellten Steckplatzes für die Aufnahme eines Ladesteckers.

Die Schließposition SP der Schiebetüre 14f ist vorzugsweise mittels einer Gummidichtung 27 abgedichtet und bündig mit der Außenkorpus-Wand 3e. Das Erreichen dieser Schließposition SP erfordert einerseits eine Bewegung innerhalb eines Vertikalversatzes VV. Hierfür ist an der Rückseite der Schiebetüre 14f ein Schlitten 32 angeordnet, an dessen Seiten sich Rädchen, drehbare Stifte oder Rollen 33a-33d befinden. Mittels dieser Rollen 33a-33d läuft der Schlitten 32 in einem Schienenprofil 25f, angetrieben durch die Rotation einer Gewindespindel 30 in einer fix mit dem Schlitten 32 verbundenen Spindelmutter 31. Die Rotation der Gewindespindel 30 wiederum ist durch einen Motor M angetrieben.

Andererseits erfordert das Erreichen der bevorzugt bündigen Schließposition SP der Schiebetüre 14f aber auch eine Bewegung innerhalb eines Horizontalversatzes HV. Hierfür weist das Schienenprofil 25f eine Krümmung 34 auf und die Gewindespindel 30 bzw. gleich der ganze Motor M kann mitschwenken, weil er an einer Motorlagerung 28 mittels eines Drehgelenks 29 drehbar gelagert ist.

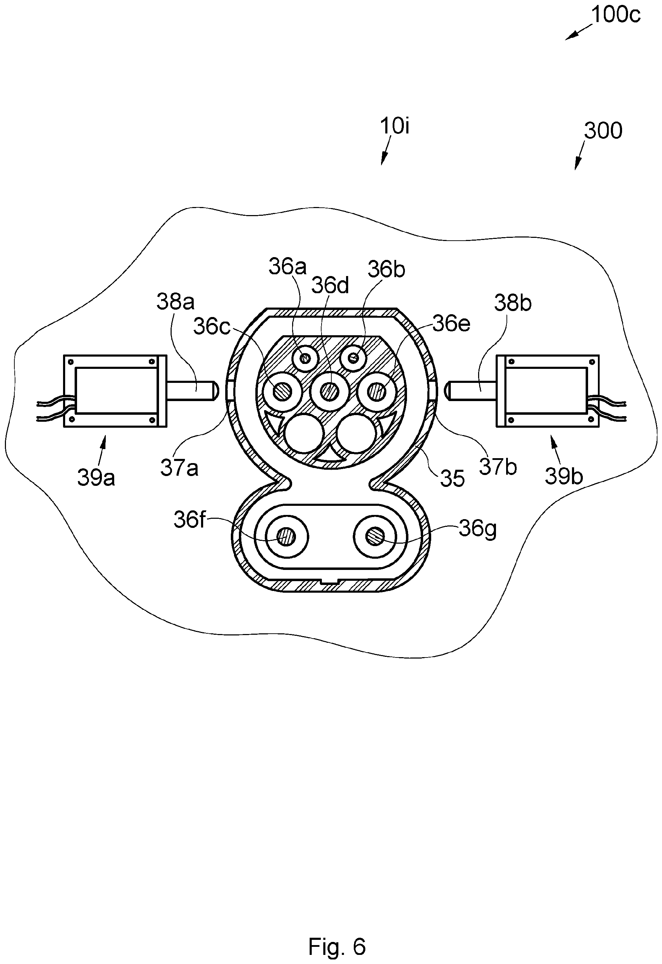

In der Fig. 6 ist lediglich symbolisch und schematisch eine weitere Ausgestaltungsvariante einer weiterhin erfindungsgemäßen Kombi-Lade- bzw. Basisstation 100c dargestellt, die sich durch eine mechanische Sperrvorrichtung 300 auszeichnet.

Hierfür ist ein Steckplatz 10i vorgesehen, beispielhaft als einer für einen CCS-Ladestecker dargestellt, mit einem entsprechenden formschlüssigen negativen Formgehäuse 35 und aus Bohrungen hervorstehenden Kontaktpins 36a-36g. Erfindungsgemäß sind in dem Formgehäuse 35 vorzugsweise aber auch zwei beispielhaft gegenüberliegend angeordnete Aussparungen 37a und 37b angeordnet, in die jeweils ein Arretierstift 38a eines Aktuators 39a und ein Arretierstift 38b eines Aktuators 39b eingeschoben und auch wieder herausgezogen werden können. Hierbei würden sie einen in den Steckplatz 10i eingesteckten Ladestecker mechanisch sperren, der in seinem positiven Formgehäuse korrespondierende Bohrungen aufweist, die den Aussparungen 37a und 37b entsprechen.

### Bezugszeichenliste

1, 1a - Außenkorpus, Außengehäuse
2, 2a - Dachfläche, Deckel
3a-3e - Außenkorpus-Wand
4 - Vorsprung
5a-5c - geneigte Fläche
6a-6c - Ladekabel
7a-7c - Ladestecker
8 - Aufsatz
9a-9c - Vertiefung
10a-10i - Steckplatz
11 - Ladeanschluss-Symbole
12a, 12b - Lüftungsgitter-Reihe
13a, 13b - Lüftungsöffnung
14a-14f - Schiebetür
15, 15a - Display
16, 16a - Kamera
17, 17a - Beleuchtungsbalken
18a-18f - Lüftungsgitter
19a-19c - Halteblech
20a-20d - Korpusseite
21 - Innenkorpus
22 - Luftzwischenraum
23a, 23b - Sockelfuß
24 - Aussparung
25a-25f - Schiene, Schienenprofil
26 - Schiebetür- bzw. Steckplatz-Öffnung
27 - Gummidichtung
28 - Motorlagerung
29 - Drehgelenk
30 - Gewindespindel
31 - Spindelmutter
32 - Schlitten
33a-33d - Rolle, Rädchen, drehbarer Stift
34 - Krümmung von 25f
35 - Formgehäuse
36a-36g - Kontaktpin
37a, 37b - Aussparung
38a, 38b - Arretierstift
39a, 39b - Aktuator
100, 100a-100c - Kombi-Ladestation, Basisstation
200 - Schiebetür-Schließmechanismus
300 - Sperrvorrichtung
AO, AO₁ - Aufstellungsort
HV - Horizontalversatz
LZ - Luftzirkulation
M - Motor, Stellmotor
ÖP - Öffnungsposition von 14f
S, S₁ - Sockel
SA - Symmetrieachse
SP - Schließposition von 14f
T - Taillierung
VV - Vertikalversatz

## Patentansprüche

1. Kombi-Ladestation (100, 100a-100c) für das Laden von Elektrofahrzeugen, mit mindestens einem Außenkorpus (1, 1a) und mindestens einem Steckplatz (10a-10i) für die formschlüssige Aufnahme je eines Ladesteckers (7a-7c), **dadurch gekennzeichnet, dass** die Kombi-Ladestation (100a-100c) einen Innenkorpus (21) umfasst, der von dem Außenkorpus (1a) so umhüllt ist, dass zwischen einer Außenkorpus-Wand (3a-3e) und dem Innenkorpus (21) ein Luftzwischenraum (22) angeordnet ist, in dem eine Luftzirkulation (LZ) von unteren Lüftungsöffnungen (13a) zu oberen Lüftungsöffnungen (13b) erfolgt **und dass** der mindestens eine Steckplatz (10d-10i) an dem Innenkorpus (21) angeordnet ist **und dass** der Außenkorpus (1a) in einem mittigen Bereich mittels einer Taillierung (T) tailliert ist **und dass** auf der Höhe und gegenüber des Steckplatzes (10a-10i) eine Schiebetür (14a-14f) an der Außenkorpus-Wand (3a-3e) angeordnet ist.

2. Kombi-Ladestation (100a-100c) nach einem der vorhergehenden Ansprüche, **dadurch gekennzeichnet, dass** die Kombi-Ladestation (100a-100c) eine gewölbte Dachfläche (2a) umfasst.

3. Kombi-Ladestation (100a-100c) nach Anspruch 2, **dadurch gekennzeichnet, dass** ein Solarpaneel an der Dachfläche (2a) oder an der Außenkorpus-Wand (3a-3e) angeordnet oder integriert ist.

4. Kombi-Ladestation (100a-100c) nach einem der vorhergehenden Ansprüche, **dadurch gekennzeichnet, dass** mindestens ein Ladekabel (6a-6c) im Außenkorpus (3a-3e) oder in einem unterirdisch angeordneten Gehäuse aufrollbar ist.

5. Kombi-Ladestation (100a-100c) nach einem der vorhergehenden Ansprüche, **dadurch gekennzeichnet, dass** die Schiebetür (14a-14f) eine relativ zur Außenkorpus-Wand (3a-3e) innenliegende Öffnungsposition (ÖP) und eine mit der Außenkorpus-Wand (3a-3e) bündig abschließende Schließposition (SP) aufweist.

6. Kombi-Ladestation (100a-100c) nach einem der vorhergehenden Ansprüche, **dadurch gekennzeichnet, dass** die Schiebetür (14a-14f) angetrieben mit einem Motor (M) motorisch bis an eine Muffe eines eingesteckten Ladesteckers zustellbar ist.

7. Kombi-Ladestation (100a-100c) nach einem der vorhergehenden Ansprüche, **dadurch gekennzeichnet, dass** die Kombi-Ladestation (100a-100c) mindestens einen Infrarot-Sensor und mindestens einen Distanzsensor umfasst.

8. Kombi-Ladestation (100a-100c) nach einem der vorhergehenden Ansprüche, **dadurch gekennzeichnet, dass** die Kombi-Ladestation (100a-100c) mindestens eine Kamera (16, 16a) umfasst.

9. Kombi-Ladestation (100a-100c) nach einem der vorhergehenden Ansprüche, **dadurch gekennzeichnet, dass** die Kombi-Ladestation (100a-100c) in ein Smartgrid integriert ist.

10. Kombi-Ladestation (100a-100c) nach einem der vorhergehenden Ansprüche, **dadurch gekennzeichnet, dass** die Kombi-Ladestation (100a-100c) mindestens einen Kondensator umfasst.

11. Kombi-Ladestation (100a-100c) nach einem der vorhergehenden Ansprüche, **dadurch gekennzeichnet, dass** mindestens zwei Steckplätze (10a-10i) an einer Trommel rotierbar oder an einem Schiebemechanismus verschiebbar angeordnet sind.

12. Kombi-Ladestation (100c) nach einem der vorhergehenden Ansprüche, **dadurch gekennzeichnet, dass** die Kombi-Ladestation (100c) mindestens eine mechanische Sperrvorrichtung (300) umfasst, mit mindestens zwei Arretierstiften (38a, 38b), die mittels Aktuatoren (39a, 39b) antreibbar sind.

13. Kombi-Ladestation (100a-100c) nach einem der vorhergehenden Ansprüche, **dadurch gekennzeichnet, dass** die Kombi-Ladestation (100a-100c) ein oder zwei gegenüberliegend angeordnete Displays (15, 15a) und ein oder zwei gegenüberliegend angeordnete Beleuchtungsbalken (17, 17a) umfasst.

14. Verfahren zur Anwendung einer Kombi-Ladestation (100a-100c) nach einem der vorhergehenden Ansprüche 1-13, mit mindestens einem motorisch betätigten Schiebetür-Schließmechanismus (200) für mindestens einen verschließbaren Steckplatz (10a-10i), mit mindestens einer mechanischen Sperrvorrichtung (300) an dem Steckplatz (10a-10i), und mit einem WiFi-Modul für die Kommunikation mit einer Smartphone-App, **dadurch gekennzeichnet, dass** die folgenden Verfahrensschritte ausgeführt werden:
a) - Erfassen einer Bewegung im Umfeld der Kombi-Ladestation (100a-100c), im Erfassungsradius mindestens eines passiven Infrarot-Senders der Kombi-Ladestation (100a-100c);
b) - Einschalten mindestens eines Distanzsensors der Kombi-Ladestation (100a-100c);
c) - Durchführen von Distanzmessungen zu dem bewegten Objekt, zur Selektion nur relevanter bewegter Objekte;
d) - Hochfahren bzw. Einschalten der Kombi-Ladestation (100a-100c) von einem stromfreien oder -reduzierten Standby-Betrieb in einen betriebsbereiten Zustand, falls die Distanzmessung unter dem Verfahrensschritt c) zum Ergebnis geführt hat, dass ein relevantes Objekt die Bewegung vor der Kombi-Ladestation (100a-100c) verursacht hat;
e) - Ansteuern eines WiFi-Moduls der Kombi-Ladestation (100a-100c) und Erfassen der Daten der Smartphone-App eines Kunden;
f) - Abgleichen der erfassten Daten mit einer Datenbank;
g) - Auswählen und Ansteuern des Steckplatzes (10a-10i) mit dem passenden Ladevorgang;
h) - Betätigen des Schiebetür-Schließmechanismus (200) zum Bewegen einer Schiebetür (14a-14f) des ausgewählten Steckplatzes (10a-10i) in eine Öffnungsposition (ÖP) der Schiebetür (14a-14f);
i) - falls erforderlich, Entsperren der mechanischen Sperrvorrichtung (300) durch radiales Ausfahren von Arretierstiften (38a, 38b) mittels Aktuatoren (39a, 39b);
j) - Aufnehmen des Ladesteckers (7a-7c) in dem Steckplatz (10a-10i);
k) - Versperren der mechanischen Sperrvorrichtung (300) durch radiales Einfahren der Arretierstifte (38a, 38b) mittels der Aktuatoren (39a, 39b);
l) - Herunterfahren der Schiebetür (14a-14f) an die Muffe des eingesteckten Ladesteckers (7a-7c);
m) - Starten einer Kommunikation zwischen der Kombi-Ladestation (100a-100c) und dem Batterie-Managementsystem des Elektrofahrzeugs;
n) - Starten des Ladevorgangs;
o) - Beenden des Ladevorgangs;
p) - Beenden der Kommunikation zwischen der Kombi-Ladestation (100a-100c) und dem Batterie-Managementsystem des Elektrofahrzeugs;
q) - Hochfahren der Schiebetür (14a-14f) von der Muffe des eingesteckten Ladesteckers (7a-7c);
r) - Entsperren der mechanischen Sperrvorrichtung (300) durch radiales Ausfahren der Arretierstifte (38a, 38b) mittels der Aktuatoren (39a, 39b);
s) - Freigeben des Ladesteckers (7a-7c) aus dem Steckplatz (10a-10i);
t) - sensorbasiertes Erfassen des Wegfahrens des Elektrofahrzeugs;
u) - Betätigen des Schiebetür-Schließmechanismus (200) zum Verschließen der Schiebetür (14a-14f) des Steckplatzes (10a-10i);
v) - Herunterfahren resp. Ausschalten der Kombi-Ladestation (100a-100c) vom betriebsbereiten Zustand in den stromfreien oder zumindest stromreduzierten Standby-Betrieb, falls das Erfassen unter dem Verfahrensschritt t) zum Ergebnis geführt hat, dass das Elektrofahrzeug weggefahren ist.

15. Verfahren zur Anwendung einer Kombi-Ladestation (100a-100c) nach einem der vorhergehenden Ansprüche 1-13, mit mindestens einem motorisch betätigten Schiebetür-Schließmechanismus (200) für mindestens einen verschließbaren Steckplatz (10a-10i), mit mindestens einer mechanischen Sperrvorrichtung (300) an dem Steckplatz (10a-10i), und mit mindestens einer Kamera (16, 16a), **dadurch gekennzeichnet, dass** die folgenden Verfahrensschritte ausgeführt werden:
a') - Erfassen einer Bewegung im Umfeld der Kombi-Ladestation (100a-100c), im Erfassungsradius mindestens eines passiven Infrarot-Senders der Kombi-Ladestation (100a-100c);
b') - Einschalten mindestens eines Distanzsensors der Kombi-Ladestation (100a-100c);
c') - Durchführen von Distanzmessungen zu dem bewegten Objekt, zur Selektion nur relevanter bewegter Objekte;
d') - Hochfahren bzw. Einschalten der Kombi-Ladestation (100a-100c) von einem stromfreien oder -reduzierten Standby-Betrieb in einen betriebsbereiten Zustand, falls die Distanzmessung unter dem Verfahrensschritt c') zum Ergebnis geführt hat, dass ein relevantes Objekt die Bewegung vor der Kombi-Ladestation (100a-100c) verursacht hat;
e') - Erfassen eines Kennzeichens eines Elektrofahrzeugs oder eines Ladesteckers (7a-7c) eines Elektrofahrzeugs, mittels Bilderkennung durch die Kamera (16, 16a);
f') - Abgleichen der erfassten Daten mit einer Datenbank;
g') - Auswählen und Ansteuern des Steckplatzes (10a-10i) mit dem passenden Ladevorgang;
h') - Betätigen des Schiebetür-Schließmechanismus (200) zum Bewegen einer Schiebetür (14a-14f) des ausgewählten Steckplatzes (10a-10i) in eine Öffnungsposition (ÖP) der Schiebetür (14a-14f);
i') - falls erforderlich, Entsperren der mechanischen Sperrvorrichtung (300) durch radiales Ausfahren von Arretierstiften (38a, 38b) mittels Aktuatoren (39a, 39b);
j') - Aufnehmen des Ladesteckers (7a-7c) in dem Steckplatz (10a-10i);
k') - Versperren der mechanischen Sperrvorrichtung (300) durch radiales Einfahren der Arretierstifte (38a, 38b) mittels der Aktuatoren (39a, 39b);
l') - Herunterfahren der Schiebetür (14a-14f) an die Muffe des eingesteckten Ladesteckers (7a-7c);
m') - Starten einer Kommunikation zwischen der Kombi-Ladestation (100a-100c) und dem Batterie-Managementsystem des Elektrofahrzeugs;
n') - Starten des Ladevorgangs;
o') - Beenden des Ladevorgangs;
p') - Beenden der Kommunikation zwischen der Kombi-Ladestation (100a-100c) und dem Batterie-Managementsystem des Elektrofahrzeugs;
q') - Hochfahren der Schiebetür (14a-14f) von der Muffe des eingesteckten Ladesteckers (7a-7c);
r') - Entsperren der mechanischen Sperrvorrichtung (300) durch radiales Ausfahren der Arretierstifte (38a, 38b) mittels der Aktuatoren (39a, 39b);
s') - Freigeben des Ladesteckers (7a-7c) aus dem Steckplatz (10a-10i);
t') - sensor- bzw. kamerabasiertes Erfassen des Wegfahrens des Elektrofahrzeugs;
u') - Betätigen des Schiebetür-Schließmechanismus (200) zum Verschließen der Schiebetür (14a-14f) des Steckplatzes (10a-10i);
v') - Herunterfahren resp. Ausschalten der Kombi-Ladestation (100a-100c) vom betriebsbereiten Zustand in den stromfreien oder zumindest stromreduzierten Standby-Betrieb, falls das Erfassen unter dem Verfahrensschritt t' zum Ergebnis geführt hat, dass das Elektrofahrzeug weggefahren ist.

## Claims

1. Combined charging station (100, 100a-100c) for the charging of electric vehicles, with at least one outer body (1, 1a) and at least one slot (10a-10i) for the form-fitting reception of each one charging plug (7a-7c), **characterised in that** the combined charging station (100a-100c) comprises an inner body (21), being encased by the outer body (1a) in such manner, that in-between an outer body wall (3a-3e) and the inner body (21) is arranged an air interspace (22), in which an air circulation (LZ) is carried out from lower ventilation openings (13a) to upper ventilation openings (13b) **and that** the at least one slot (10d-10i) is arranged on the inner body (21) **and that** the outer body (1a) is waisted in a central area by means of a waist (T) **and that** a sliding door (14a-14f) is arranged on the outer body wall (3a-3e) at the height and opposite to the slot (10a-10i).

2. Combined charging station (100a-100c) according to one of the preceding claims, **characterised in that** the combined charging station (100a-100c) comprises an arched roof surface (2a).

3. Combined charging station (100a-100c) according to claim 2, **characterised in that** a solar panel is arranged or integrated on the roof surface (2a) or on the outer body wall (3a-3e).

4. Combined charging station (100a-100c) according to one of the preceding claims, **characterised in that** at least one charging cable (6a-6c) can be rolled up in the outer body (3a-3e) or in a housing arranged underground.

5. Combined charging station (100a-100c) according to one of the preceding claims, **characterised in that** the sliding door (14a-14f) has an internal opening position (ÖP) relative to the outer body wall (3a-3e) and a closing position (SP) which is flush with the outer body wall (3a-3e).

6. Combined charging station (100a-100c) according to one of the preceding claims, **characterised in that** the sliding door (14a-14f), driven by a motor (M), can be moved up to a socket of an inserted charging plug.

7. Combined charging station (100a-100c) according to one of the preceding claims, **characterised in that** the combined charging station (100a-100c) comprises at least one infrared sensor and at least one distance sensor.

8. Combined charging station (100a-100c) according to one of the preceding claims, **characterised in that** the combined charging station (100a-100c) comprises at least one camera (16, 16a).

9. Combined charging station (100a-100c) according to one of the preceding claims, **characterised in that** the combined charging station (100a-100c) is integrated into a smart grid.

10. Combined charging station (100a-100c) according to one of the preceding claims, **characterised in that** the combined charging station (100a-100c) comprises at least one capacitor.

11. Combined charging station (100a-100c) according to one of the preceding claims, **characterised in that** at least two slots (10a-10i) are arranged rotatable on a drum or displaceable on a sliding mechanism.

12. Combined charging station (100c) according to one of the preceding claims, **characterised in that** the combined charging station (100c) comprises at least one mechanical locking device (300), with at least two locking pins (38a, 38b), which are drivable by means of actuators (39a, 39b).

13. Combined charging station (100a-100c) according to one of the preceding claims, **characterised in that** the combined charging station (100a-100c) comprises one or two oppositely arranged displays (15, 15a) and one or two oppositely arranged lighting bars (17, 17a).

14. Process for the application of a combined charging station (100a-100c) according to one of the preceding claims 1-13, with at least one motor-operated sliding door locking mechanism (200) for at least one lockable slot (10a-10i), with at least one mechanical locking device (300) at the slot (10a-10i), and with a WiFi module for the communication with a smartphone app, **characterised in that** the following process steps are carried out:
a) - detecting a movement in the vicinity of the combined charging station (100a-100c), in the detection radius of at least one passive infrared transmitter of the combined charging station (100a-100c);
b) - switching on at least one distance sensor of the combined charging station (100a-100c);
c) - carrying out distance measurements to the moving object, for selecting only relevant moving objects;
d) - starting up or switching on the combined charging station (100a-100c) from a power-free or power-reduced standby mode to an operational state, if the distance measurement under process step c) has led to the result that a relevant object has caused the movement in front of the combined charging station (100a-100c);
e) - triggering a WiFi module of the combined charging station (100a-100c) and capturing the data of a customer's smartphone app;
f) - comparing the captured data with a database;
g) - selecting and controlling the slot (10a-10i) with the appropriate charging operation;
h) - actuating the sliding door locking mechanism (200) to move a sliding door (14a-14f) of the selected slot (10a-10i) into an opening position (ÖP) of the sliding door (14a-14f);
i) - if necessary, unlocking the mechanical locking device (300) by radially extending locking pins (38a, 38b) by means of actuators (39a, 39b);
j) - receiving the charging plug (7a-7c) in the slot (10a-10i);
k) - locking the mechanical locking device (300) by radially bringing in of the locking pins (38a, 38b) by means of the actuators (39a, 39b);
l) - lowering the sliding door (14a-14f) onto the socket of the inserted charging plug (7a-7c);
m) - starting a communication between the combined charging station (100a-100c) and the battery management system of the electric vehicle;
n) - starting the charging process;
o) - ending the charging process;
p) - terminating of the communication between the combined charging station (100a-100c) and the battery management system of the electric vehicle;
q) - raising the sliding door (14a-14f) from the socket of the inserted charging plug (7a-7c);
r) - unlocking the mechanical locking device (300) by radially extending the locking pins (38a, 38b) by means of the actuators (39a, 39b);
s) - releasing the charging plug (7a-7c) from the slot (10a-10i);
t) - sensor-based detection of the departure of the electric vehicle;
u) - operating the sliding door locking mechanism (200) to close the sliding door (14a-14f) of the slot (10a-10i);
v) - shutting down or switching off the combined charging station (100a-100c) from the ready-to-operate state to the power-free or at least power-reduced standby mode if the detection under process step t) has led to the result that the electric vehicle has driven away.

15. Process for the application of a combined charging station (100a-100c) according to one of the preceding claims 1-13, with at least one motor-operated sliding door locking mechanism (200) for at least one lockable slot (10a-10i), with at least one mechanical locking device (300) on the slot (10a-10i), and with at least one camera (16, 16a), **characterised in that** the following process steps are carried out:
a') - detecting a movement in the vicinity of the combined charging station (100a-100c), in the detection radius of at least one passive infrared transmitter of the combined charging station (100a-100c);
b') - switching on at least one distance sensor of the combined charging station (100a-100c);
c') - carrying out distance measurements to the moving object, for selecting only relevant moving objects;
d') - starting up or switching on the combined charging station (100a-100c) from a power-free or power-reduced standby mode to an operational state, if the distance measurement under process step c') has led to the result that a relevant object has caused the movement in front of the combined charging station (100a-100c);
e') - detecting a license plate of an electric vehicle or of a charging plug (7a-7c) of an electric vehicle, by means of image recognition by the camera (16, 16a);
f') - comparing the captured data with a database;
g') - selecting and controlling the slot (10a-10i) with the appropriate charging operation;
h') - actuating the sliding door locking mechanism (200) to move a sliding door (14a-14f) of the selected slot (10a-10i) into an opening position (ÖP) of the sliding door (14a-14f);
i') - if necessary, unlocking the mechanical locking device (300) by radially extending locking pins (38a, 38b) by means of actuators (39a, 39b);
j') - receiving the charging plug (7a-7c) in the slot (10a-10i);
k') - locking the mechanical locking device (300) by radially bringing in of the locking pins (38a, 38b) by means of the actuators (39a, 39b);
l') - lowering the sliding door (14a-14f) onto the socket of the inserted charging plug (7a-7c);
m') - starting a communication between the combined charging station (100a-100c) and the battery management system of the electric vehicle;
n') - starting the charging process;
o') - ending the charging process;
p') - terminating of the communication between the combined charging station (100a-100c) and the battery management system of the electric vehicle;
q') - raising the sliding door (14a-14f) from the socket of the inserted charging plug (7a-7c);
r') - unlocking the mechanical locking device (300) by radially extending the locking pins (38a, 38b) by means of the actuators (39a, 39b);
s') - releasing the charging plug (7a-7c) from the slot (10a-10i);
t') - sensor- or camera-based detection of the departure of the electric vehicle;
u') - operating the sliding door locking mechanism (200) to close the sliding door (14a-14f) of the slot (10a-10i);
v') - shutting down or switching off the combined charging station (100a-100c) from the ready-to-operate state to the power-free or at least power-reduced standby mode if the detection under process step t') has led to the result that the electric vehicle has driven away.

## Revendications

1. Station de charge combinée (100, 100a-100c) pour la charge de véhicules électriques, avec au moins un corps extérieur (1, 1a) et au moins un emplacement d'enfichage (10a-10i) pour la réception par complémentarité de forme d'une fiche de charge (7a-7c), **caractérisé en ce que** la station de charge combinée (100a-100c) comprend un corps intérieur (21) qui est enveloppé par le corps extérieur (1a) de telle sorte qu'entre une paroi de corps extérieur (3a-3e) et le corps intérieur (21) est disposé un espace intermédiaire d'air (22) dans lequel s'effectue une circulation d'air (LZ) des ouvertures de ventilation inférieures (13a) vers les ouvertures de ventilation supérieures (13b) et **en ce que** au moins un emplacement d'enfichage (10d-10i) est disposé sur le corps intérieur (21) et **en ce que** le corps extérieur (1a) est rétréci dans une zone centrale au moyen d'un rétrécissement (T) et **en ce qu'**à la hauteur et en face de l'emplacement d'enfichage (10a-10i) est disposée une porte coulissante (14a-14f) sur la paroi de corps extérieur (3a-3e).

2. Station de charge combinée (100a-100c) selon l'une des revendications précédentes, **caractérisée en ce que** la station de charge combinée (100a-100c) comprend une surface de toit bombée (2a) .

3. Station de charge combinée (100a-100c) selon la revendication 2, **caractérisée en ce qu'**un panneau solaire est disposé ou intégré sur la surface du toit (2a) ou sur la paroi du corps extérieur (3a-3e).

4. Station de charge combinée (100a-100c) selon l'une des revendications précédentes, **caractérisée en ce qu'**au moins un câble de charge (6a-6c) est enroulante dans le corps extérieur (3a-3e) ou dans un boîtier disposé sous terre.

5. Station de charge combinée (100a-100c) selon l'une des revendications précédentes, **caractérisée en ce que** la porte coulissante (14a-14f) présente une position d'ouverture (ÖP) située à l'intérieur par rapport à la paroi de corps extérieur (3a-3e) et une position de fermeture (SP) affleurant la paroi de corps extérieur (3a-3e).

6. Station de charge combinée (100a-100c) selon l'une des revendications précédentes, **caractérisée en ce que** la porte coulissante (14a-14f) entraînée par un moteur (M) peut être avancée par moteur jusqu'à un manchon d'une fiche de charge enfichée.

7. Station de charge combinée (100a-100c) selon l'une des revendications précédentes, **caractérisée en ce que** la station de charge combinée (100a-100c) comprend au moins un détecteur infrarouge et au moins un détecteur de distance.

8. Station de charge combinée (100a-100c) selon l'une des revendications précédentes, **caractérisée en ce que** la station de charge combinée (100a-100c) comprend au moins une caméra (16, 16a).

9. Station de charge combinée (100a-100c) selon l'une des revendications précédentes, **caractérisée en ce que** la station de charge combinée (100a-100c) est intégrée dans un réseau intelligent.

10. Station de charge combinée (100a-100c) selon l'une des revendications précédentes, **caractérisée en ce que** la station de charge combinée (100a-100c) comprend au moins un condensateur.

11. Station de charge combinée (100a-100c) selon l'une des revendications précédentes, **caractérisée en ce qu'**au moins deux emplacements d'enfichage (10a-10i) sont disposés rotatifs sur un tambour ou coulissants sur un mécanisme de coulissement.

12. Station de charge combinée (100c) selon l'une des revendications précédentes, **caractérisée en ce que** la station de charge combinée (100c) comprend au moins un dispositif de blocage mécanique (300), avec au moins deux goupilles d'arrêt (38a, 38b) entraînables au moyen d'actionneurs (39a, 39b).

13. Station de charge combinée (100a-100c) selon l'une des revendications précédentes, **caractérisée en ce que** la station de charge combinée (100a-100c) comprend un ou deux afficheurs (15, 15a) disposés en vis-à-vis et une ou deux barres d'éclairage (17, 17a) disposées en vis-à-vis.

14. Procédure d'utilisation d'une station de charge combinée (100a-100c) selon l'une des revendications précédentes 1-13, avec au moins un mécanisme de fermeture de porte coulissante (200) actionné par un moteur pour au moins un emplacement d'enfichage (10a-10i) fermable, avec au moins un dispositif de blocage mécanique (300) sur l'emplacement d'enfichage (10a-10i), et avec un module WiFi pour la communication avec une application pour smartphone, **caractérisé en ce que** les étapes de procédure suivantes sont exécutées :
a) - détection d'un mouvement dans l'environnement de la station de charge combinée (100a-100c), dans le rayon de détection d'au moins un émetteur infrarouge passif de la station de charge combinée (100a-100c);
b) - mise en marche d'au moins un détecteur de distance de la station de charge combinée (100a-100c);
c) - réalisation de mesurages de distance par rapport à l'objet en mouvement, pour la sélection uniquement des objets en mouvement relevants;
d) - démarrage respectivement mise en marche de la station de charge combinée (100a-100c) d'un mode de veille sans courant ou à courant réduit à un état prêt à fonctionner, si le mesurage de distance dans l'étape de procédure c) a conduit au résultat qu'un objet relevant a provoqué le mouvement devant la station de charge combinée (100a-100c);
e) - commande d'un module WiFi de la station de charge combinée (100a-100c) et détection des données de l'application pour smartphone d'un client;
f) - comparaison des données détectées avec une base de données;
g) - sélection et commande de l'emplacement d'enfichage (10a-10i) avec la procédure de chargement appropriée;
h) - actionnement du mécanisme de fermeture de la porte coulissante (200) pour déplacer une porte coulissante (14a-14f) de l'emplacement d'enfichage (10a-10i) sélectionné vers une position d'ouverture (ÖP) de la porte coulissante (14a-14f);
i) - si nécessaire, déverrouillage du dispositif de blocage mécanique (300) par des goupilles d'arrêt (38a, 38b) à extension radiale au moyen d'actionneurs (39a, 39b);
j) - insertion de la fiche de charge (7a-7c) dans l'emplacement d'enfichage (10a-10i);
k) - blocage du dispositif de blocage mécanique (300) par rétraction radiale des goupilles d'arrêt (38a, 38b) au moyen des actionneurs (39a, 39b);
l) - abaissement de la porte coulissante (14a-14f) jusqu'au manchon de la fiche de charge branchée (7a-7c);
m) - démarrage d'une communication entre la station de charge combinée (100a-100c) et le système de gestion de la batterie du véhicule électrique
n) - démarrage de la procédure de chargement;
o) - arrêt de la procédure de chargement;
p) - arrêt de la communication entre la station de charge combinée (100a-100c) et le système de gestion de la batterie du véhicule électrique;
q) - soulevage de la porte coulissante (14a-14f) du manchon de la fiche de charge branchée (7a-7c);
r) - déblocage du dispositif de blocage mécanique (300) par rétraction radiale des goupilles d'arrêt (38a, 38b) au moyen des actionneurs (39a, 39b);
s) - libération de la fiche de charge (7a-7c) de l'emplacement d'enfichage (10a-10i);
t) - détection du départ du véhicule électrique par détecteur;
u) - actionnement du mécanisme de fermeture de la porte coulissante (200) pour fermeture de la porte coulissante (14a-14f) de l'emplacement d'enfichage (10a-10i);
v) - arrêt respectivement désactivation de la station de charge combinée (100a-100c) de l'état de fonctionnement au mode veille sans courant ou au moins à courant réduit, si la détection de l'étape de procédure t) a conduit au résultat que le véhicule électrique s'est éloigné.

15. Procédure d'utilisation d'une station de charge combinée (100a-100c) selon l'une des revendications précédentes 1-13, avec au moins un mécanisme de fermeture de porte coulissante (200) actionné par un moteur pour au moins un emplacement d'enfichage (10a-10i) fermable, avec au moins un dispositif de blocage mécanique (300) sur l'emplacement d'enfichage (10a-10i), et avec au moins une caméra (16, 16a), **caractérisé en ce que** les étapes de procédure suivantes sont exécutées:
a') - détection d'un mouvement dans l'environnement de la station de charge combinée (100a-100c), dans le rayon de détection d'au moins un émetteur infrarouge passif de la station de charge combinée (100a-100c);
b') - mise en marche d'au moins un détecteur de distance de la station de charge combinée (100a-100c);
c') - réalisation de mesurages de distance par rapport à l'objet en mouvement, pour la sélection uniquement des objets en mouvement relevants;
d') - démarrage respectivement mise en marche de la station de charge combinée (100a-100c) d'un mode de veille sans courant ou à courant réduit à un état prêt à fonctionner, si le mesurage de distance dans l'étape de procédure c') a conduit au résultat qu'un objet relevant a provoqué le mouvement devant la station de charge combinée (100a-100c);
e') - détection d'un signe distinctif d'un véhicule électrique ou d'une fiche de charge (7a-7c) d'un véhicule électrique, au moyen de la reconnaissance d'images par la caméra (16, 16a);
f') - comparaison des données détectées avec une base de données;
g') - sélection et commande de l'emplacement d'enfichage (10a-10i) avec la procédure de chargement appropriée;
h') - actionnement du mécanisme de fermeture de la porte coulissante (200) pour déplacer une porte coulissante (14a-14f) de l'emplacement d'enfichage (10a-10i) sélectionné vers une position d'ouverture (ÖP) de la porte coulissante (14a-14f);
i') - si nécessaire, déverrouillage du dispositif de blocage mécanique (300) par des goupilles d'arrêt (38a, 38b) à extension radiale au moyen d'actionneurs (39a, 39b);
j') - insertion de la fiche de charge (7a-7c) dans l'emplacement d'enfichage (10a-10i);
k') - blocage du dispositif de blocage mécanique (300) par rétraction radiale des goupilles d'arrêt (38a, 38b) au moyen des actionneurs (39a, 39b);
l') - abaissement de la porte coulissante (14a-14f) jusqu'au manchon de la fiche de charge branchée (7a-7c);
m') - démarrage d'une communication entre la station de charge combinée (100a-100c) et le système de gestion de la batterie du véhicule électrique;
n') - démarrage de la procédure de chargement;
o') - arrêt de la procédure de chargement;
p') - arrêt de la communication entre la station de charge combinée (100a-100c) et le système de gestion de la batterie du véhicule électrique;
q') - soulevage de la porte coulissante (14a-14f) du manchon de la fiche de charge branchée (7a-7c);
r') - déblocage du dispositif de blocage mécanique (300) par rétraction radiale des goupilles d'arrêt (38a, 38b) au moyen des actionneurs (39a, 39b);
s') - libération de la fiche de charge (7a-7c) de l'emplacement d'enfichage (10a-10i);
t') - détection du départ du véhicule électrique par détecteur respectivement par caméra;
u') - actionnement du mécanisme de fermeture de la porte coulissante (200) pour fermeture de la porte coulissante (14a-14f) de l'emplacement d'enfichage (10a-10i);
v') - arrêt respectivement désactivation de la station de charge combinée (100a-100c) de l'état de fonctionnement au mode veille sans courant ou au moins à courant réduit, si la détection de l'étape de procédure t') a conduit au résultat que le véhicule électrique s'est éloigné.
